# EUROPEAN PATENT APPLICATION

(11) **EP 4 549 254 A1**
(43) Date of publication of application: **07.05.2025**
(21) Application number: 24181841.8
(22) Date of filing: 12.06.2024
(51) Int. Cl.: B60R 16/023, H04J 3/06

(54) **VEHICLE, APPARATUS, DATA CARRIER, COMPUTER PROGRAM, AND METHODS FOR A RECEIVER OF A MESSAGE AND FOR SYNCHRONIZING THE RECEIVER'S TIME BASE FOR GENERATING FRESHNESS VALUES**

(30) Priority: 03.11.2023 EP 23207624
(71) Applicant: Elektrobit Automotive GmbH, 91058 Erlangen (DE)
(72) Inventor: Reisinger, Johannes, 1070 Wien (AT); Ziehensack, Michael, 1070 Wien (AT)
(74) Representative: Continental Corporation

(57) **Abstract**

Embodiments of the present disclosure relate to a vehicle, an apparatus, a data carrier, a computer program, and a method for a receiver of a message and for synchronizing the receiver's time base for generating freshness values. The method comprises receiving the transmitter's freshness values together with messages from the transmitter and verifying the messages based on the freshness values. Further, the method suggests determining an offset of the freshness values which were used for successful verification, to the receiver's freshness values derived from the local time base of the receiver at the time of reception of the messages if the messages are verified successfully.

## Description

Embodiments of the present disclosure relate to a vehicle, an apparatus, a data carrier, a computer program, and a method for a receiver of a message and for synchronizing the receiver's time base for generating freshness values.

Communication protocols may use "message authentication codes" (MAC) in order to protect the content of exchanged messages against changes by any external entity. MAC calculation is usually done by calculating a cryptographic hash value based on content of transmitted data and a secret key. In order to prevent replay attacks, a "freshness value" is also included into the MAC calculation.

In some approaches, the freshness value is an integer value, incremented by a known fixed amount l1 (e.g., l1 = 1) every t1 time step (e.g., t1 = 1 second), measured by means of a local time of involved communication partners. An initial value of the freshness value is determined by a protocol involving at least one node in addition to the communication partners (e.g., a freshness value master node). In the case that there is no (highly reliable) synchronization of local time basis of the communication partners the freshness values of the communication partners may diverge over time. Therefore, periodic or on-demand resynchronization of the freshness value by executing a synchronization protocol involving at least one node in addition to the direct communication partners may be required. For security reasons, such resynchronization process may have to be cryptographically secured. In order to accept the message at a receiver in communication with a transmitter, its contained MAC is checked. To this end, the receiver may calculate a MAC using the current freshness value or any freshness value effective in n1 (e.g., n1 >= 1) prior time quanta of length t1 or n2 (n2 >= 1) later such time quanta.

For selecting the correct freshness value, different techniques may be applied.

According to a first technique the calculation may be done for all possible freshness values and the freshness value which matches may be selected. If no versions value matches, the message may be discarded.

According to a second technique, a truncated freshness value is transmitted together with the message specifying the least significant bits of the freshness value used to calculate the MAC at the center of the message. This information allows to restrict the number of freshness values to the ones matching the truncated freshness value.

In the above techniques, for applications with high reliability requirements, e.g., in fail-operational applications, software and hardware components involved into the calculation of the freshness value have to meet predefined high reliability requirements. The software used at the communication partners may meet those high reliability requirements, but any additional software or hardware components (e.g., the freshness value master node, the freshness value synchronization software, and/or a global time synchronization mechanism) may not.

Hence, there may be a demand for an improved synchronization concept for generating freshness values.

This demand may be satisfied by the subject matter of the appended independent claims. Optional embodiments are disclosed by the appended dependent claims.

In particular, the present disclosure provides a solution which may make additional software for the synchronization superfluous.

Embodiments provide a method for a receiver of a message and for synchronizing the receiver's time base for generating freshness values with freshness values of a transmitter of the message. The method comprises receiving the transmitter's freshness values together with messages from the transmitter and verifying the messages based on the freshness values. Further, the method suggests determining an offset of the freshness values which were used for successful verification, to the receiver's freshness values derived from the local time base of the receiver at the time of reception of the messages if the messages are verified successfully. Also, the method comprises adjusting the time base of the receiver based on the offsets.

In doing so, a freshness value master and a related protocol does not need to be highly reliable, e.g., they may not need to meet any predefined reliability requirements. Similarly, a freshness value client does not need to be highly reliable, e.g., may not need to meet any predefined reliability requirements.

Apart from that, the proposed approach is a relatively simple (and thus easy to qualify) algorithm and may effectively prevent replay attacks for a reliable communication.

In embodiments, the time base may be adjusted based on an average offset for the multiple freshness values (from the respective local freshness values at the time of reception).

Optionally, the offset is indicative of a predicted offset which is determined from a predefined selection of the received freshness values/(respective) value offsets. This may allow a proactive adjustment of the time base to ensure reliable communication.

The predefined selection may include a predefined number of the latest freshness values/value offsets.

In practice, the predicted offset may be determined using the mean function and/or using a linear regression function. Alternatively, other metrics or functions configured to determine and/or anticipate the predicted offset may be used.

For adjusting the time base, the time base may be increased if the predicted offset exceeds a predefined upper threshold, or the time base may be decreased if the predicted offset falls short of a predefined lower threshold.

Receiving the freshness values may comprise receiving message authentication codes comprising a respective freshness value. In this case, the method may comprise verifying the messages based on the message authentication codes.

Also, the method may further comprise determining at least one freshness value for a message using the adjusted time base and transmitting the message including the freshness value to the transmitter or to another device. In this way, the receiver enables the transmitter or the other device to verify the authenticity of the message from the receiver.

Further embodiments provide a computer program comprising instructions which, when the computer program is executed by a computer, cause the computer to carry out an embodiment of the proposed method.

Also, embodiments may provide a computer-readable data carrier having stored thereon proposed computer program.

A skilled person will appreciate, that the proposed approach may be also implemented in an apparatus.

Accordingly, some embodiments may provide an apparatus comprising one or more interfaces for communication and a data processing circuit configured to execute an embodiment of the proposed method.

The apparatus, for example may be implemented in a vehicle.

So, further embodiments may provide a vehicle comprising an embodiment of the proposed apparatus.

Further, embodiments are now described with reference to the attached drawings. It should be noted that the embodiments illustrated by the referenced drawings show merely optional embodiments as an example and that the scope of the present disclosure is by no means limited to the embodiments presented:

### Brief description of the drawings

Fig. 1 shows a flow chart schematically illustrating an embodiment of a method for a receiver of a message and for synchronizing the receiver's time base for generating freshness values with freshness values of a transmitter of the message;
Fig. 2 shows a block diagram schematically illustrating a use case of the proposed approach; and
Fig. 3 shows a block diagram schematically illustrating an embodiment of an apparatus according to the proposed approach.

The following detailed description pertains to the accompanying drawings, which illustrate embodiments of the proposed approach as outlined in the claims. The drawings serve as a visual aid to facilitate a comprehensive understanding of the structure, operation, and various embodiments of the proposed approach. It is noted that while drawings and corresponding explanations may relate to specific embodiments, the scope of the present disclosure is not limited to these examples. Other embodiments, variations, and modifications within the scope of the claims are contemplated and deemed to be within the purview of this disclosure.

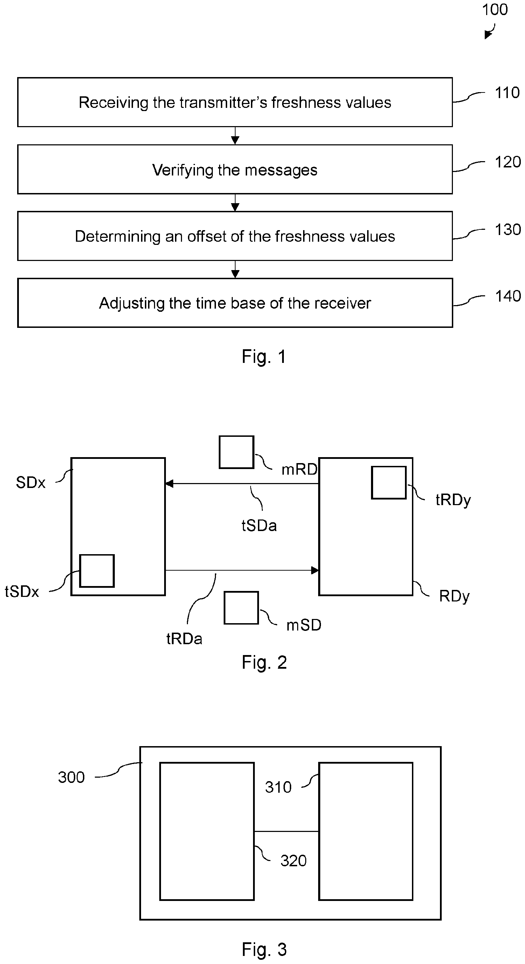

Fig. 1 shows a flow chart schematically illustrating an embodiment of a method 100 for a receiver of a message and for synchronizing the receiver's time base for generating freshness values with freshness values of a transmitter of the message.

It is noted that the terms "receiver" and "transmitter" are to be understood broadly in context of the present disclosure. So, the receiver and the transmitter may be any circuit for receiving and transmitting, respectively, one or more messages for electronic communication. In practice, such circuit may comprise an interface for wireless communication (e.g., an antenna) or wired communication (e.g., a pin and/or cable) for receiving and/or transmitting signals, respectively, and a signal processing circuit for processing received signals and/or generating signals for transmission.

In automotive embodiments, the receiver and transmitter may be nodes for a vehicle communication network. For example, at least one of or both the receiver and the transmitter may be communicatively coupled ECUs or components thereof for a vehicle.

The method 100 comprises receiving 110 the transmitter's freshness values together with messages from the transmitter.

In automotive applications, the messages may relate to a function of the vehicle. In particular, the messages may relate to a safety-critical function.

The freshness values allow to verify that a message was sent in close time proximity to its reception, e.g., in order to detect attacks and/or manipulation of the messages, for example, replay attacks, and/or any other attacks delaying the transmission of the messages.

In practice, the freshness values may be individually generated for each of the messages. To this end, the transmitter may comprise a time reference (time base), e.g., a clock, which determines a local time of the transmitter. The time reference may generate the freshness values just before or when the messages are transmitted. So, a respective freshness value of a message may be indicative of a transmission time of the messages, e.g., it may (approximately) indicate when the message has been transmitted (recording to the transmitter's time reference).

Hence, the freshness value may be understood as a timestamp of the transmission.

Method 100 further comprises verifying 120 the messages based on the freshness values. For this, it is checked if the message was sent in close time proximity to its reception based on the transmitter's freshness values. To this end, the receiver may comprise another time reference (time base), e.g., a clock, which determines the local time of the receiver. Specifically, the receiver's time reference may generate a freshness value indicating a reception time of the messages. So, for verification, the transmitter's and the receiver's freshness values may be compared to check if the message was sent in close time proximity to its reception. This may be done on a per message basis to determine their individual trustworthiness.

In practice, the verification is successful if the message was sent in close time proximity to its reception. In this case, the respective message may be considered valid or trustworthy in the further processing of the message (e.g., the receiver trusts a content of the message).

Otherwise, if the transmission duration exceeds the maximum acceptable transmission duration, the verification is unsuccessful. Accordingly, the respective message may be considered invalid or not trustworthy in the further processing of the message (e.g., the receiver mistrusts the content of the message).

In some applications, the time bases count up in predefined time steps. A time quantum of the time steps may be selected such that the freshness values may match or differ from each other by at most a predefined number of time steps (e.g., by one or two time steps), based on the maximum acceptable deviation of the local and remote freshness value at any point in time. In practice, the time quantum is in the order of magnitude of some fractions of a second.

As the skilled person will understand, the time references of the receiver at the transmitter may ideally need to be synchronized (for successful message verification). However, in practice, the time references/time bases of the receiver and the transmitter may (slowly) diverge over time. Hence, the verification may fail over time.

Method 100, therefore, suggests determining 130 an offset of the freshness values which were used for successful verification, to the receiver's freshness values derived from the local time base of the receiver at the time of reception of the messages if the messages are verified successfully. This allows, to determine if and how the time bases diverge from each other or has been diverged from each other.

In other words, the method steps may be explained as follows:
110: Receiving an authenticated message containing - explicitly or implicitly - the freshness value of the transmitter at the time of transmission. In this context, "implicitly" means that the message does not contain the actual freshness value (or part of it) which was used in MAC calculation, but the receiver performs a MAC calculation using each of the potential valid freshness values and accepts the message if any of the calculated MAC values matches the received MAC (and thus it implicitly knows the freshness value used in original MAC calculation). "Explicitly" means that the message only includes precisely the freshness value (or part of it) which was used for MAC calculation at the transmitter.
120: Verifying the message and determining the received freshness value
130: Determining the offset of the local freshness value to the received freshness value at the time of reception

The freshness values of the receiver and transmitter, e.g., may differ by at least one time step of the time bases. Accordingly, an offset may include one or more time steps.

Method 100 includes adjusting 140 the time base of the receiver based on the offsets. For this, the time base of the receiver may be a calibrated. In practice, the time base of the receiver, e.g., is adjusted such that freshness values of the receiver match with freshness values of the transmitter. In this way, a synchronization of time bases may be achieved in order to ensure successful verification of valid/trustworthy messages.

The skilled person will understand that the proposed method may be implemented in different ways. Further features and aspects are described below with reference to the example shown in Fig. 2.

Specifically, Fig. 2 schematically illustrates a use case of the proposed approach in a fail operational system including at least one transmitter SDx (which may be also referred to as "sending device") and at least one receiver RDy (which may be also referred to as "receiving device").

The proposed approach is based on the idea that a stream of received messages including valid MACs plus points in time of reception within each communication channel contains enough information to synchronize the freshness values of a node (e.g., transmitter and/or receiver) to each of its direct communication partners. In case each receiving end of a channel maintains a separate copy of the freshness value for this channel and applies the proposed approach, dependency to a globally shared freshness value for all or a group of channels (e.g., receiving channel tRDa and sending channel tSDa)), which needs to be calculated and distributed in a fail-operational manner, may be avoided.

The transmitter comprises a local time base tSDx and the receiver comprises a local time base tRDy endless configured to execute proposed freshness value synchronization mechanism.

The freshness value synchronization mechanism of the receiver Rdy may maintain a separate freshness value for a communication channel with the transmitter SDx. In case of multiple transmitters, the receiver may maintain a separate freshness value for each communication channel with any of the transmitters.

The freshness value may be initialized at the receiver Rdy in the transmitter SDx to a synchronized value (e.g., by using a single freshness value master) and updated using the respective local time base at devices SDx and Rdy.

The local time bases tSDx and tRDy might deviate over time (within a specified maximum deviation rate), such that some continuous synchronization may be desired in order to keep a matching algorithm (e.g., for verification) working.

While the algorithm used for initialization of the freshness value usually does not have high reliability requirements (since fail operational mode usually may start at some point in time after initialization), it may be desired that the algorithm used for synchronization of the freshness values meets predefined (high) reliability requirements.

To keep the freshness value reliably synchronized on Rdy devices, the following embodiment of the proposed approach may be applied when receiving multiple messages including a message mSD from the transmitter:
a) According to one example the time base is optionally adjusted based on an average offset for the multiple freshness values. The receiver Rdy determines, for the message mSD, the freshness value of a successful MAC verification and puts this value into a predefined sliding window of size sw (it is actually the freshness value used for successful MAC verification minus a local freshness value of the receiver and of the respective connection at the time of reception of the message).
b) Then, a mean value of all freshness values within the sliding window is calculated. If the mean value is below a predefined threshold thl (e.g., -0.5), the value of the local time base tRDy may be decreased by some fraction tqfl of a predefined time quantum t1 (e.g., by t1/2) and the contents of the sliding window are reset to default values. The same applies if the mean is above a predefined threshold thu - in this case the value of the local time base tRDy is increased by some fraction tqfu of the defined time quanta T-1 and the contents of the sliding window are reset to default values.

Instead of calculating a mean value of all values stored in a sliding window, also a different algorithm can be used, e.g., to synchronize the local time base of the receiver based on a linear regression of all or a predefined selection of freshness value offsets (e.g., for a predefined number of the latest freshness values) with respect to the local time of reception.

It is assumed that there is a maximum period in between any two consecutive messages received on any channel. This period has to be predefined in a way that the drift of the two-time bases tSDx and tRDy for the respective channel is low enough to keep the algorithm working without synchronization during this period.

The skilled person will appreciate that proposed approach may be applied irrespective of whether the local time base of the sending device tSDx is synchronized to some time master, if it is free running, or if it is synchronized to some other time source, as long as a difference of the rate of its local time base to the rate of the local time bases of all receiving nodes TSDy is below some defined threshold.

Also, the proposed approach is applicable to standard devices, e.g., devices which do not implement the above-described method and may be supported if there is a bi-directional communication with a device implementing the proposed method. In this case, the device implementing the proposed method may use the adjusted freshness value for verification of messages from Rdy to a recipient (e.g., SDx) via a sending channel tSDa.

The proposed approach may also support Interworking with a set of more than one standard devices (including multicast communication). In such case, the freshness values of the receiving channel and the sending channel may need to be synchronized (which also applies to the communication with only one standard device). In other words, the freshness value for any sending channel tSDa to any of the set of standard devices shall be the freshness value from any of the receiving channels tRDa.

Skilled person will also appreciate that the proposed approach may be applied in an apparatus, as outlined in more detail below with reference to Fig. 3.

Fig. 3 shows a block diagram schematically illustrating an embodiment of such an apparatus 300. The apparatus comprises one or more interfaces 310 for communication and a data processing circuit 320 configured to execute the proposed method.

In embodiments, the one or more interfaces 310 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 320 may correspond to or comprise any type of programable hardware. So, examples of the data processing circuit 320, e.g., comprise a memory, microcontroller, field programable gate arrays, one or more central, and/or graphical processing units. To execute the proposed method, the data processing circuit 320 may be configured to access or retrieve an appropriate computer program for the execution of the proposed method from a memory of the data processing circuit 320 or a separate memory which is communicatively coupled to the data processing circuit 320.

It is further noted that the proposed approach may be at least partly implemented as a computer program and/or computer implemented method. So, steps and/or features of described embodiments may be implemented in a computer program which when it is executed by a computer, or any kind of programmable hardware causes the computer or hardware to execute one or more steps or parts of the proposed approach.

For an automotive application, the proposed apparatus 300 may be implemented in a vehicle, e.g., in an ECU of the vehicle or in any other node of a vehicle communication network.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method (100) for a receiver of a message and for synchronizing the receiver's time base for generating freshness values with freshness values of a transmitter of the message, the method (100) comprising:
receiving (110) the transmitter's freshness values together with messages from the transmitter;
verifying (120) the messages based on the freshness values;
if the messages are verified successfully, determining (130) an offset of the freshness values which were used for successful verification, to the receiver's freshness values derived from the local time base of the receiver at the time of reception of the messages; and
adjusting (140) the time base of the receiver based on the offsets.

2. The method (100) of claim 1, wherein the time base is adjusted based on an average offset for the multiple freshness values.

3. The method (100) of claim 1 or 2, wherein the offset is indicative of a predicted offset which is determined from a predefined selection of the received freshness values.

4. The method (100) of claim 3, wherein the predefined selection includes a predefined number of the latest freshness values.

5. The method (100) of claim 3 or 4, wherein the predicted offset is determined using the mean function.

6. The method (100) of claim 3 or 4, wherein the predicted offset is determined using a linear regression function.

7. The method (100) of any one of the preceding claims, wherein the time base is increased if the predicted offset exceeds a predefined upper threshold, or the time base is decreased if the predicted offset falls short of a predefined lower threshold.

8. The method (100) of any one of the preceding claims, wherein receiving the freshness values comprises receiving message authentication codes comprising a respective freshness value, and wherein the method (100) comprises verifying the messages based on the message authentication codes.

9. The method (100) of any one of the preceding claims, wherein the method (100) further comprises determining at least one freshness value for a message using the adjusted time base and transmitting the message including the freshness value to the transmitter or to another device.

10. A computer program comprising instructions which, when the computer program is executed by a computer, cause the computer to carry out the method (100) of any one of the claims 1 to 9.

11. A computer-readable data carrier having stored thereon the computer program of claim 10.

12. An apparatus (300) comprising:
one or more interfaces (310) for communication; and
a data processing circuit (320) configured to execute the method (100) of any one of the claims 1 to 9.

13. A vehicle comprising an apparatus (300) according to claim 12.
